# DEMANDE DE BREVET EUROPEEN

(11) **EP 4 049 948 A1**
(43) Date de publication de la demande: **31.08.2022**
(21) Numéro de dépôt: 22158692.8
(22) Date de dépôt: 25.02.2022
(51) Int. Cl.: B65G 47/34, B65G 1/137

(54) **CHARIOT DE MANUTENTION À SUPPORTS INCLINÉS ET BUTÉES**

(30) Priorité: 25.02.2021 FR 2101834; 25.02.2021 FR 2101851; 25.02.2021 FR 2101856
(71) Demandeur: Balea, 34270 Saint Mathieu de Treviers (FR)
(72) Inventeur: COSMAS, Vassili, 34000 MONTPELLIER (FR); MESTRE, Max, 34270 SAINT MATHIEU DE TREVIERS (FR)
(74) Mandataire: Cornuejols, Marine Sophie

(57) **Abrégé**

Le chariot (20) de manutention d'au moins un emballage (37) prédéterminé en forme de parallélépipède rectangle, comporte, pour chaque emballage à transporter :
- un support (26) plan incliné par rapport à l'horizontale, muni d'une butée inférieure horizontale (28) pour empêcher le glissement de l'emballage et supporter l'emballage dans une position où il présente deux faces verticales et
- une butée supérieure (29) positionnée au-dessus du support dont la distance de la butée inférieure est inférieure à la longueur de la diagonale d'une face verticale de l'emballage.

## Description

### Domaine technique de l'invention

La présente invention vise un chariot de manutention à supports inclinés et butées et une station de déchargement d'un tel chariot. Elle s'applique, en particulier, aux préparations de commandes dans des espaces de stockage.

### État de la technique

Les espaces de stockage, ou magasins, comportent des étagères portant des articles selon de nombreuses références. Que ce soit pour la vente par correspondance ou pour l'approvisionnement d'un réseau de distributeurs ou revendeurs, il est nécessaire de traiter rapidement une commande, c'est-à-dire assembler les différents articles commandés dans un même emballage ou groupe d'emballages pour leur transport.

On connaît des magasins entièrement automatisés ou robotisés. Ces magasins sont onéreux à fabriquer et maintenir et ne peuvent être rentabilisés que pour des débits d'articles très élevés. On connaît aussi des magasins dans lesquels des manutentionnaires déplacent des chariots munis d'étagères supportant des emballages correspondant à des destinataires, emballages où le manutentionnaire place successivement les articles commandés par ce destinataire. Puis le manutentionnaire achemine le chariot vers une zone de fermeture, de stockage et d'expédition des emballages ou de leur contenu. Le temps passé pour traiter une commande dans ces magasins est trop important et grève la rentabilité du magasin.

### Présentation de l'invention

La présente invention vise à remédier à tout ou partie de ces inconvénients.

À cet effet, la présente invention vise un chariot de manutention d'au moins un emballage prédéterminé en forme de parallélépipède rectangle, qui comporte, pour chaque emballage à transporter :
- un support plan incliné par rapport à l'horizontale, muni d'une butée inférieure horizontale pour empêcher le glissement de l'emballage et supporter l'emballage dans une position où il présente deux faces verticales et
- une butée supérieure positionnée au-dessus du support dont la distance de la butée inférieure est inférieure à la longueur de la diagonale d'une face verticale de l'emballage.

Grâce à ces dispositions, l'ouverture de chaque emballage, casier ou carton est inclinée, ce qui facilite le positionnement d'articles dans l'emballage. La butée supérieure interdit le basculement de l'emballage, même si son centre de gravité n'est pas au-dessus du support.

Dans des modes de réalisation, la butée supérieure présente une forme d'arceau parcourant la face supérieure de l'emballage. Grâce à ces dispositions, le positionnement d'un emballage vide sur un support est aisé puisqu'il suffit de le positionner sous l'arceau formant la butée supérieure. De plus, en cas de basculement, deux faces verticales de l'emballage viennent en appui sur cet arceau, ce qui réduit les risques de déformation de l'emballage, par rapport à une butée sur laquelle une seule face de l'emballage viendrait en appui.

Dans des modes de réalisation, le chariot objet de l'invention comporte un rouleau horizontal libre en rotation surmontant la butée inférieure. Grâce à ces dispositions, lorsqu'une personne ou une machine soulève l'arête inférieure de l'emballage qui est retenue par la butée inférieure, l'emballage supporté par le support incliné roule sur le rouleau horizontal et sort, au moins partiellement, du chariot, ce qui facilite sa reprise à la main ou par la machine.

Dans des modes de réalisation, le chariot comporte une pluralité de supports à la même hauteur, une pluralité de hauteurs de supports et des supports débouchant sur au moins deux faces du chariot. Grâce à ces dispositions, on multiplie le nombre d'emballages supportés par le chariot sans augmenter son emprise au sol dans la même proportion. Par exemple le chariot porte, de chaque côté, au moins deux niveaux où se trouvent au moins deux supports d'emballages, soit une contenance totale d'au moins huit emballages.

Dans des modes de réalisation, chaque support d'emballage inférieur est plus écarté du centre de gravité du chariot que chaque support d'emballage qui est au-dessus de ce support d'emballage inférieur. Grâce à ces dispositions, l'embouchure supérieure de l'emballage posé sur le support d'emballage inférieur est plus accessible au manutentionnaire pour placer des articles dans les emballages inférieurs.

Dans des modes de réalisation, le chariot objet de l'invention comporte, pour au moins un support, un capteur de mesure de poids des articles présents sur ledit support.

Grâce à ces dispositions, une vérification de la référence de l'article placé dans l'emballage est possible ainsi qu'une vérification du nombre d'articles placés dans l'emballage.

Dans des modes de réalisation, le chariot objet de l'invention comporte un châssis supportant les supports et une roue motrice positionnée au centre de la base rectangulaire du châssis. Grâce à ces dispositions, la motorisation du chariot est simplifiée ainsi que sa maintenance.

Dans des modes de réalisation, un timon de conduite est positionné sur une face, dite « arrière » du chariot, une caméra est positionnée sur la face du chariot opposée à la face arrière, caméra dont le champ optique est à l'extérieur du chariot, la face arrière du chariot comportant un écran de visualisation configuré pour afficher l'image captée par la caméra.

Grâce à ces dispositions, un manutentionnaire peut conduire le chariot en ayant une visualisation de ce qui se trouve sur le chemin du chariot et en évitant, ainsi, des risques de collision avec des objets ou des personnes.

Dans des modes de réalisation, le chariot comporte un moyen de guidage du conducteur du chariot vers un emballage supporté par le chariot dans lequel le prochain article est à placer.

Grâce à ces dispositions, le conducteur du chariot peut se concentrer sur la conduite et suivre les indications de guidage que le chariot lui fournit. La rapidité de chargement des emballages et la sécurité des biens et des personnes sont ainsi améliorées.

Dans des modes de réalisation et selon un deuxième aspect de l'invention, le chariot de manutention d'au moins un emballage, comporte :
- un moyen d'accès à une mémoire de positions d'articles dans un espace de stockage où se déplace le chariot,
- un moyen de détermination de la position du chariot dans cet espace de stockage et
- un moyen de guidage du conducteur du chariot vers un article à placer dans un emballage.

Grâce à ces dispositions, le conducteur du chariot peut plus rapidement et avec moins de fatigue atteindre chaque article à placer dans un emballage.

Dans des modes de réalisation, le moyen de détermination de la position du chariot comporte au moins une caméra et un moyen de traitement d'images fournies par au moins une dite caméra. Grâce à ces dispositions, la détermination de position n'est pas soumise à des interférences d'ondes électromagnétiques.

Dans des modes de réalisation, le chariot comporte un écran de visualisation au-dessus d'un timon, l'écran étant configuré pour afficher l'image fournie par une caméra. Grâce à ces dispositions, un manutentionnaire peut conduire le chariot en ayant une visualisation de ce qui se trouve sur le chemin du chariot et en évitant, ainsi, des risques de collision avec des objets ou des personnes.

Dans des modes de réalisation, le moyen de guidage du conducteur du chariot comporte :
- lorsque le chariot est statique, l'affichage sur l'écran, d'une représentation d'un chemin à faire suivre au chariot et/ou de l'emplacement suivant où au moins un article doit être prélevé et,
- lorsque le chariot est mobile, l'affichage sur l'écran au moins de l'image fournie par la caméra. Grâce à ces dispositions, avant de démarrer le chariot, un manutentionnaire peut repérer l'emplacement où il va prélever le prochain article à placer dans un emballage porté par le chariot.

Dans des modes de réalisation, le moyen de guidage du conducteur du chariot comporte au moins les deux sources lumineuses positionnée de part et d'autre du chariot, une de ces sources lumineuses émettant un signal lumineux prédéterminé pour représenter le côté où se trouve l'emballage dans lequel le prochain article doit être placé.

Grâce à ces dispositions, le manutentionnaire qui conduit le chariot voit immédiatement la direction qu'il doit prendre une fois un article prélevé dans l'espace de stockage, sans avoir besoin de chercher de quel côté du chariot se trouve l'emballage où placer cet article.

La présente invention vise aussi une station de déchargement d'un chariot de manutention supportant au moins un emballage, chariot dans lequel, pour chaque emballage à transporter, la butée inférieure horizontale maintient l'emballage dans une position prédéterminée où il présente une arrête inférieure en appui sur la butée inférieure, la station comportant, pour chaque support d'un chariot :
- une fourche mobile configurée pour passer en dessous de l'arête inférieure de chaque emballage, en dehors de l'emprise de la butée inférieure, chaque fourche étant munie de roulettes dont l'axe de rotation est parallèle à l'arête inférieure de l'emballage et
- une motorisation de chaque fourche mobile configurée pour, d'abord, placer la fourche mobile en dessous de l'arête inférieure de l'emballage puis faire remonter la fourche pour désengager l'arête inférieure de la butée inférieure.

Grâce à ces dispositions, le déplacement de la fourche permet la libération de l'emballage de la butée inférieure puis son poids entraîne l'emballage sur le support incliné et sur les roulettes de la fourche correspondant à ce support.

Dans des modes de réalisation, la station comporte :
- au moins un convoyeur à rouleaux perpendiculaires à l'arête inférieure des emballages lorsque ces emballages sont sur le chariot et
- des roulettes libres d'axes de rotation parallèles à l'arête inférieure des emballages lorsque ces emballages sont sur le chariot, les roulettes étant mises en déplacement vertical pour surplomber les rouleaux pendant le déplacement des emballages depuis le chariot jusque dans la station puis pour se rétracter afin d'être surplombées par les rouleaux.

Grâce à ces dispositions, les emballages sont d'abord déplacés sur les roulettes avant d'être déplacés sur les rouleaux du convoyeur.

Dans des modes de réalisation, les chariots comportent une pluralité de niveaux d'emballages et la station comporte au moins un ascenseur à rouleaux motorisés configuré pour amener tous les emballages au même niveau, sur un convoyeur.

Grâce à ces dispositions, l'étiquetage et le conditionnement, par exemple sur des palettes, des emballages, est effectué au même niveau, ce qui simplifie les dispositifs mis en œuvre pour réaliser ces opérations.

Dans des modes de réalisation, la station comporte un électroaimant configuré pour se fixer sur le chariot, et un détecteur de fixation de l'électroaimant, la motorisation des fourches n'étant activée qu'en cas de détection de la fixation de l'électroaimant sur un chariot.

Grâce à ces dispositions, les chariots déchargés successivement se trouvent dans la même configuration par rapport à la station.

Dans des modes de réalisation, la station comporte une barrière optique fermant un espace libre de positionnement de chariots pour leur déchargement, la motorisation des fourches n'étant activée qu'en cas de détection, par la barrière optique de l'absence d'obstacle.

Grâce à ces dispositions, on évite le risque qu'un membre d'un manutentionnaire se trouve dans l'espace de déchargement lors du mouvement des fourches.

### Brève description des figures

D'autres avantages, buts et caractéristiques particulières de l'invention ressortiront de la description non limitative qui suit d'au moins un mode de réalisation particulier du chariot de manutention et de la station de déchargement de chariot objets de la présente invention, en regard des dessins annexés, dans lesquels :
La figure 1 représente, en perspective, un mode de réalisation particulier du chariot objet de l'invention,
La figure 2 représente, en vue de côté, le chariot illustré en figure 1,
La figure 3 représente, en vue arrière, le chariot illustré en figures 1 et 2,
La figure 4 représente, en perspective, un emplacement d'emballage du chariot illustré en figures 1 à 3,
La figure 5 représente, sous forme d'un logigramme, des étapes d'un procédé de chargement d'un chariot illustré en figures 1 à 4,
La figure 6 représente, en vue arrière, une station de déchargement d'un chariot,
La figure 7 représente, en perspective, la station illustrée en figure 6, dont les cloisons externes amovibles horizontales supérieures ont été retirées,
La figure 8 représente, en vue de dessus, la station illustrée en figures 6 et 7, dont les cloisons externes amovibles horizontales supérieures ont été retirées,
La figure 9 représente, en vue de dessus, la station illustrée en figures 6 à 8, munie de ses cloisons externes amovibles horizontales supérieures,
La figure 10 représente, en vue de dessus, la station illustrée en figures 6 à 9, dont les cloisons externes amovibles horizontales supérieures ont été retirées, pendant l'arrivée d'un chariot,
La figure 11 représente, en vue de dessus, la station illustrée en figures 6 à 10, dont les cloisons externes amovibles horizontales supérieures ont été retirées, une fois le chariot en position de déchargement,
La figure 12 représente, en vue arrière partielle, une première étape de déchargement d'un chariot,
La figure 13 représente, en vue arrière partielle, une deuxième étape de déchargement d'un chariot,
La figure 14 représente, en vue arrière partielle, une troisième étape de déchargement d'un chariot,
La figure 15 représente, en vue arrière partielle, une quatrième étape de déchargement d'un chariot,
La figure 16 représente, en vue arrière partielle, une cinquième étape de déchargement d'un chariot,
La figure 17 représente, sous forme d'un logigramme, des étapes d'un procédé de déchargement d'un chariot illustré en figures 1 à 4 par une station illustrée en figures 6 à 16,
La figure 18 représente, en perspective, une variante d'emplacement d'emballage du chariot illustré en figures 1 à 3, et
La figure 19 représente, en perspective, l'arrêt du basculement d'un emballage dans la variante illustrée en figure 18.

### Description des modes de réalisation

La présente description est donnée à titre non limitatif, chaque caractéristique d'un mode de réalisation pouvant être combinée à toute autre caractéristique de tout autre mode de réalisation de manière avantageuse.

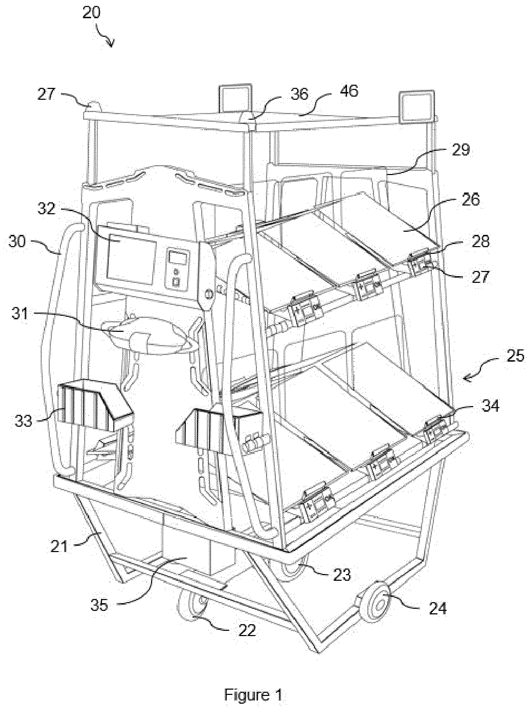

On note, dès à présent, que les figures 1 à 4, 6 à 16, 18 et 19 sont à l'échelle mais qu'elles peuvent ne pas être à la même échelle. Dans toute la description, on appelle « supérieur » ou « haut » ce qui est en haut ou orienté vers le haut, sur les figures 1 à 4, 6, 7, et 12 à 16, figures qui correspondent à la configuration d'utilisation normale du chariot et de la station objets de l'invention. On appelle « inférieur » ou « bas », ce qui est en bas ou orienté vers le bas, dans ces figures. Les notions de verticale et horizontale découlent de ces définitions. On appelle « interne » ce qui proche de ou orienté vers un plan vertical général de symétrie 47 du chariot et, externe, ce qui est orienté à l'opposé de ce plan vertical.

On observe, en figures 1 à 3, un chariot 20 comportant un châssis 21 muni d'une roue centrale motrice 23, de deux roues avant et arrière orientables 22 et deux roues latérales 24. Une batterie 35 alimente le moteur électrique de la roue motrice 23 et les autres composants électriques et électroniques du chariot 20. Grâce au châssis 21 supportant une roue motrice 23 positionnée au centre de la base rectangulaire du châssis, quatre roues 22 et 24 disposées en losange, chaque roue, 22 et 24 se trouvant au milieu de l'un des côtés de cette base rectangulaire du chariot 20. Au moins deux des roues 22 et 24 sont libres en rotation autour d'un axe de rotation vertical. Préférentiellement au moins les roues 22 qui se trouvent dans le plan de symétrie général 47 du chariot 20 sont ainsi libres. La motorisation du chariot 20 est ainsi simplifiée ainsi que sa maintenance.

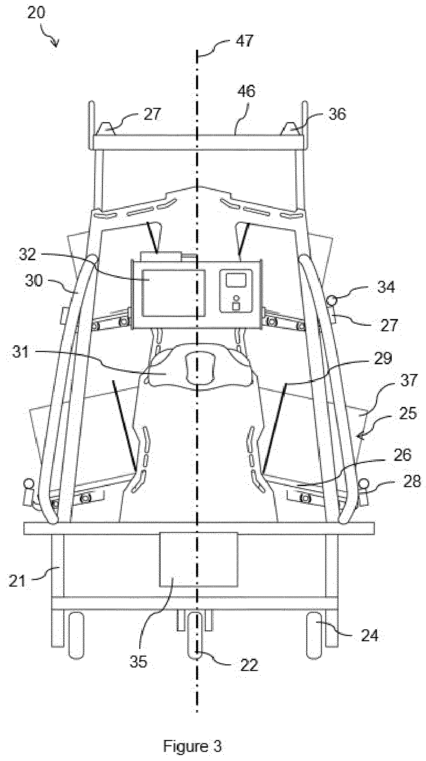

Le châssis 21 comporte des emplacements 25 destinés à recevoir des emballages 37, par exemple en carton ou en matière plastique. Chaque emballage 37 présente des dimensions prédéterminées et une forme de parallélépipède rectangle. Chaque emplacement 25 comporte un support 26 incliné vers l'extérieur par rapport à l'horizontale, c'est-à-dire dont le bord le plus éloigné du plan général de symétrie 47 (voir figure 3) du chariot 20 est plus bas que le bord opposé. Chaque support incliné 26 supporte un emballage 37 dans une position où cet emballage présente deux faces verticales orientées perpendiculairement au plan général de symétrie 47 du chariot 20.

Dans le mode de réalisation illustré dans les figures, il y a six emplacements 25 de chaque côté du chariot, en deux rangées superposées de trois emplacements 25.

Plus généralement et préférentiellement, le chariot 20 comporte une pluralité de supports 26 à la même hauteur, une pluralité de hauteurs de supports 26 et des supports 26 débouchant sur au moins deux faces du chariot. On multiplie ainsi le nombre d'emballages 37 supportés par le chariot 20 sans augmenter son emprise au sol dans la même proportion. Par exemple le chariot 20 porte, de chaque côté, au moins deux niveaux où se trouvent au moins deux supports 26 d'emballages 37, soit une contenance totale d'au moins huit emballages 37. Comme illustré en figure 3, préférentiellement, chaque support 26 d'emballage 37 inférieur est plus écarté du plan de symétrie 47 et donc du centre de gravité du chariot 20 que chaque support 26 d'emballage 37 qui est au-dessus de ce support d'emballage inférieur. L'embouchure supérieure de l'emballage 37 posé sur le support 26 d'emballage inférieur est ainsi plus accessible au manutentionnaire pour placer des articles 45 dans les emballages 37 inférieurs. Chaque emplacement comporte aussi un écran 27 d'interface utilisateur, une butée inférieure 28 horizontale qui retient l'emballage 37 et empêche son glissement et une butée supérieure 29. La butée supérieure 29 est positionnée au-dessus du support 26. La distance entre la butée supérieur 29 et la butée inférieure 28 est inférieure à la longueur de la diagonale d'une face verticale de l'emballage 37.

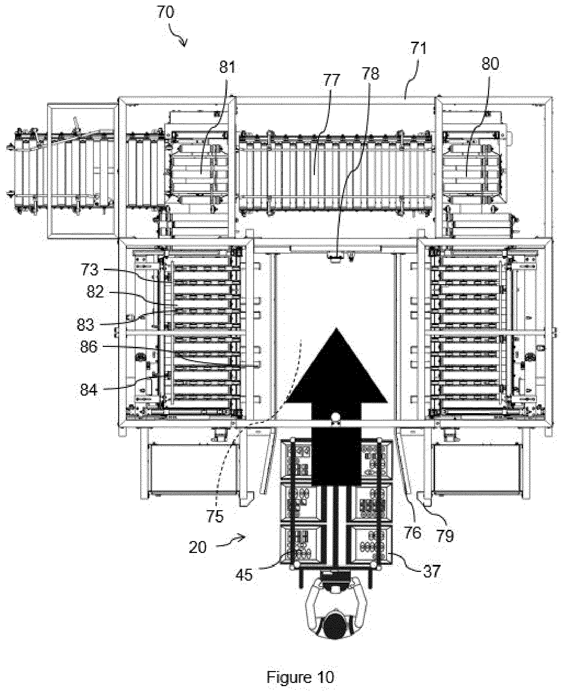

Ainsi, l'ouverture de chaque emballage 37 est inclinée, ce qui facilite le positionnement d'articles 45 (voir figure 10) dans l'emballage 37. La butée supérieure 29 interdit le basculement de l'emballage 37, même si le centre de gravité de l'emballage 37 n'est pas au-dessus du support 26. Chaque butée inférieure 28 est surmontée d'un rouleau horizontal 34 libre en rotation.

Lorsqu'une personne ou une machine soulève l'arête inférieure de l'emballage 37 qui est retenue par la butée inférieure 28, l'emballage 37 supporté par le support incliné 26 roule sur le rouleau 34 et sort, au moins partiellement, du chariot, par l'effet de la gravité, ce qui facilite sa reprise à la main ou par la machine.

La châssis 21 comporte, en face arrière, deux barres latérales 30 et un timon de conduite central 31 surmonté d'un écran de visualisation 32. Deux bacs de rangement 33 sont positionnés latéralement en dessous du timon de conduite 31. Des voyants lumineux gauche 27 et droit 36 sont positionnés en partie haute de la face arrière, ici en coin sur une étagère horizontale 46.

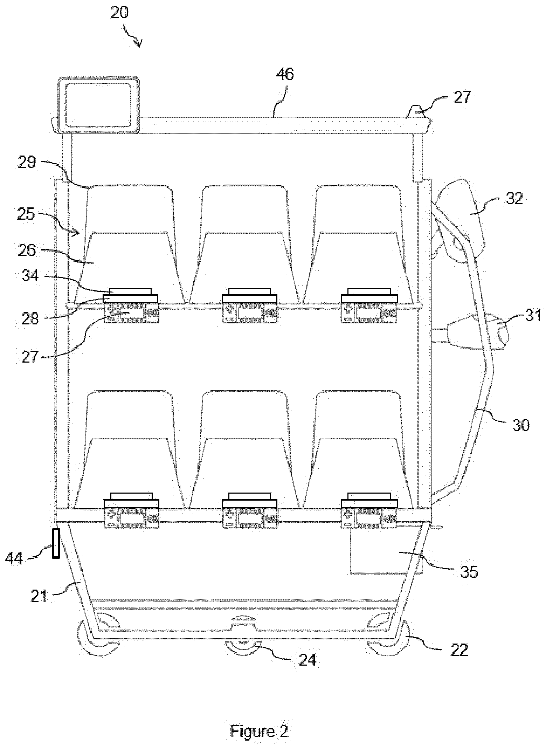

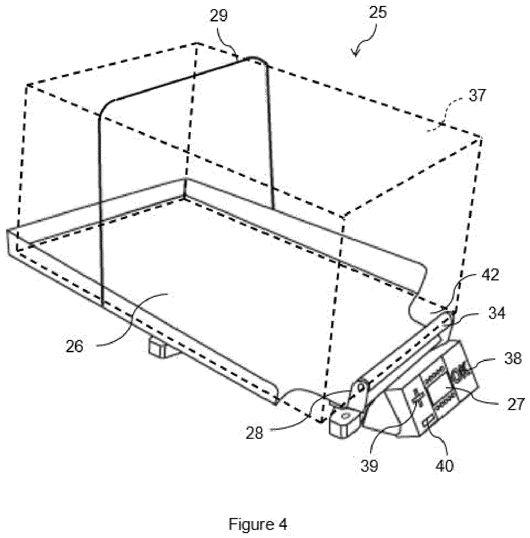

Comme illustré en figure 2, le chariot 20 est muni, en face avant, d'une plaque de métal ferromagnétique 44. Comme illustré en figure 4, dans des modes de réalisation, la butée supérieure 29 présente une forme d'arceau parcourant la face supérieure de l'emballage 37. Ainsi, le positionnement d'un emballage vide 37 sur un support 26 est aisé puisqu'il suffit de le positionner sous l'arceau formant la butée supérieure 29. De plus, en cas de basculement, les deux faces verticales de l'emballage 37 viennent en appui sur cet arceau 29, ce qui réduit les risques de déformation de l'emballage 37, par rapport à une butée sur laquelle une seule face de l'emballage 37 viendrait en appui.

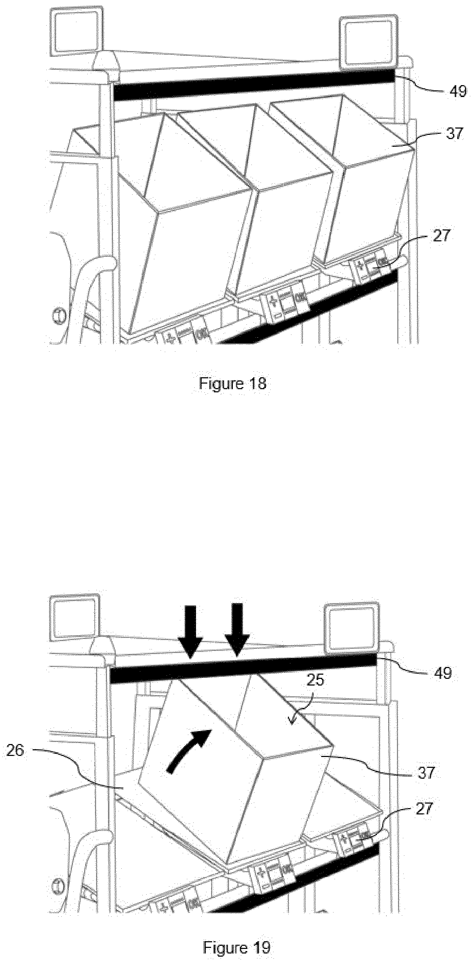

Dans la variante illustrée en figures 18 et 19, l'arceau individuel 29 est remplacé par un arceau commun aux emplacements 25 d'une même rangée de supports 26, arceau formé des armatures verticales du chariot et d'une cornière 49 qui empêche les emballages 37 de basculer, comme représenté par les flèches noires de la figure 19.

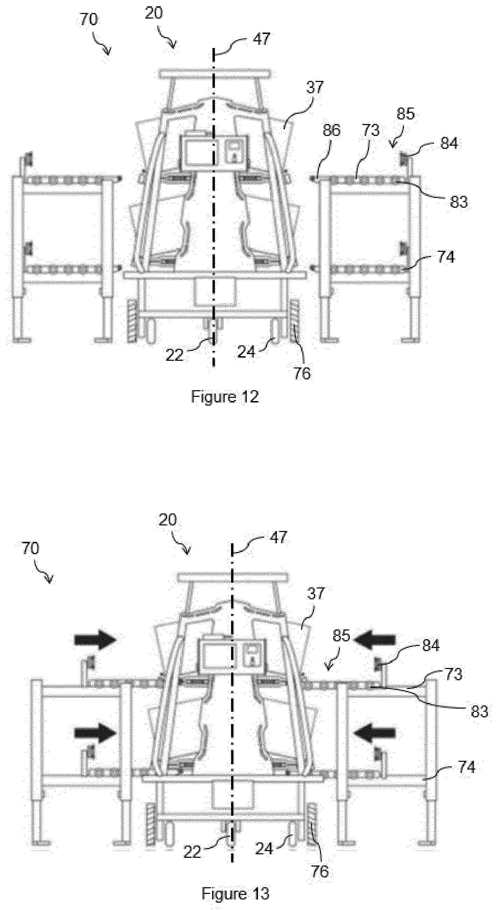

En plus de l'écran 27, l'interface utilisateur de chaque emplacement 25 comporte un bouton de validation 38, un bouton d'incrémentation 39 et un bouton de décrémentation 40. Deux ouvertures 42 sont laissées aux coins inférieurs du support 26 pour permettre le retrait de l'emballage 37, manuellement ou par une station de déchargement, comme exposé en regard des figures 12 à 16. Le chariot 20 comporte, pour au moins un support 26, un capteur de mesure (non représenté) de poids des articles présents sur ledit support. Cette mesure est effectuée en déduisant la tare constituée du support 26 et de l'emballage 37. Une vérification de la référence de l'article 45 placé dans l'emballage 37 est ainsi possible ainsi qu'une vérification du nombre d'articles 45 placés dans l'emballage 37.

Optionnellement, le chariot 20 comporte au moins un support d'un panier en textile détachable du chariot. Ce panier en textile sert, par exemple, aux déchets ou aux accessoires du préparateur.

On décrit, dans la suite, différents moyens électroniques ou informatiques mis en oeuvre par le chariot 20. Le timon de conduite 31 est positionné sur la face, dite « arrière » du chariot 20, face visible en figure 3. Une caméra (non représentée) est positionnée sur la face du chariot 20 opposée à la face arrière. Le champ optique de la caméra est à l'extérieur du chariot 20. L'écran de visualisation 32 est configuré pour afficher l'image captée par la caméra. Ainsi, un manutentionnaire peut conduire le chariot 20 en ayant une visualisation de ce qui se trouve sur le chemin du chariot 20 et en évitant, ainsi, des risques de collision avec des objets ou des personnes.

Préférentiellement, le chariot 20 comporte un moyen de guidage du conducteur du chariot vers un article 45 à placer dans un emballage 37 supporté par le chariot 20.

Préférentiellement, le moyen de guidage du conducteur du chariot 20 comporte :
- lorsque le chariot 20 est statique, l'affichage sur l'écran 32, d'une représentation d'un chemin à faire suivre au chariot 20 et/ou de l'emplacement suivant où au moins un article 45 doit être prélevé et,
- lorsque le chariot 20 est mobile, l'affichage sur l'écran 32 au moins de l'image fournie par la caméra.

Par exemple, quand le chariot 20 est statique, l'écran de visualisation 32 affiche l'emplacement suivant où se trouve au moins un article 45 à prélever sous la forme d'un plan partiel de l'espace de stockage et/ou des coordonnées (rangée et repère) de cet emplacement. L'écran de visualisation 32 affiche alors aussi le descriptif et/ou la référence de l'article 45 considéré et la quantité d'articles 45 à prélever.

Dès que le chariot 20 se déplace, c'est-à-dire dès le démarrage de la roue motorisée 23, l'écran de visualisation 32 affiche l'image captée par la caméra, pour des raisons de sécurité. En variante, l'emplacement suivant reste visible en petite dimension lorsque l'image captée par la caméra est affichée, afin de guider le préparateur sans gêner la visibilité.

Selon un autre exemple le moyen de guidage est une incrustation, dans l'image captée par la caméra, ou, plus généralement, une combinaison, à cette image captée, d'une représentation d'un chemin vers le prochain article 45 à placer dans un emballage 37.

Avec ce guidage, le conducteur du chariot 20 peut se concentrer sur la conduite et suivre les indications de guidage que le chariot 20 lui fournit. La rapidité de chargement des emballages 37 et la sécurité des biens et des personnes sont ainsi améliorées.

Pour définir ce chemin, le chariot de manutention 20 comporte, préférentiellement :
- un moyen d'accès à une mémoire de positions d'articles 45 dans un espace de stockage où se déplace le chariot 20,
- un moyen de détermination de la position du chariot 20 dans cet espace de stockage et
- un moyen de guidage du conducteur du chariot vers un article à placer dans un emballage.

On note que la mémoire de la position d'articles 45 peut être embarquée dans le chariot 20, et mise à jour par un serveur de l'espace de stockage. Alternativement, le moyen d'accès à une mémoire de positions d'articles 45 comporte un moyen d'accès, préférentiellement non filaire, à un système de gestion de l'espace de stockage, par exemple hébergé par ce serveur. Dans des modes de réalisation, le moyen de détermination de la position du chariot 20 comporte au moins une caméra et un moyen de traitement d'images fournies par au moins une dite caméra. Dans des modes de réalisation, le moyen de détermination de la position du chariot 20 comporte un moyen de réception de signaux hertziens et un moyen de positionnement en fonction de déphasages entre les signaux hertziens reçus.

Dans des modes de réalisation, le moyen de guidage du conducteur du chariot 20 comporte au moins les deux sources lumineuses 27 et 36 positionnée de part et d'autre du chariot 20, une de ces sources lumineuses 27 et 36 émettant un signal lumineux prédéterminé pour représenter le côté où se situe l'emballage 37 où va devoir être placé l'article 45.

Dans des modes de réalisation, le chariot 20 comporte un moyen d'accès à un calculateur configuré pour déterminer le chemin le plus court, en longueur et/ou en durée pour l'ensemble des articles 45 à placer dans chaque emballage 37 porté par le chariot 20. Le coût en énergie ou en temps du remplissage de chaque emballage 37 est ainsi minimisé. On note que le calculateur peut être intégré au chariot 20 ou déporté, par exemple dans le système de gestion de l'espace de stockage. Dans des modes de réalisation, le calculateur est configuré pour prendre en compte le chemin de plusieurs chariots 20 pour déterminer le chemin d'au moins un de ces chariots 20. Le calculateur peut ainsi éviter des délais d'attente dans une allée où des articles 45 doivent être pris pour être placés sur des emballages 37 supportés par différents chariots 20. Dans des modes de réalisation, le calculateur est configuré pour affecter aux emballages 37 d'un chariot 20 des articles 45 proches entre eux dans l'espace de stockage. L'ensemble des chemins parcourus par différents chariots 20 est ainsi réduit, voire optimisé.

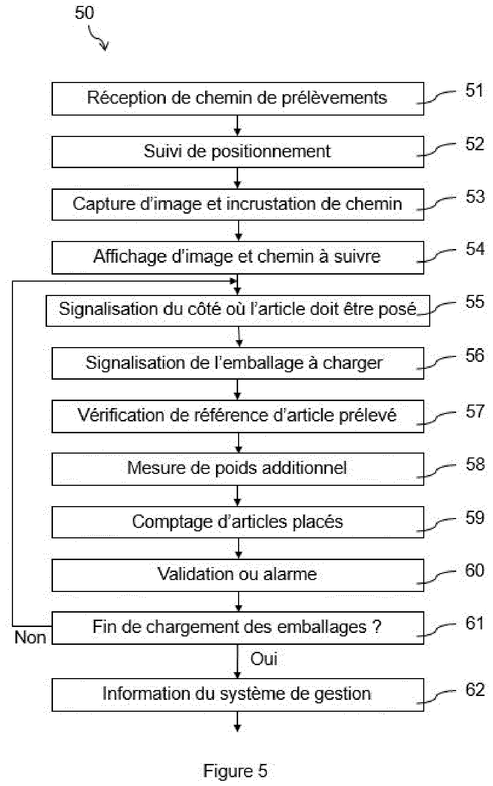

On observe, en figure 5, une succession 50 d'étapes réalisées avec le chariot 20 pour prélever les articles 45 à placer dans les emballages 37 qu'il supporte.

Au cours d'une étape 51, le chariot 20 reçoit ou calcule un chemin de prélèvement à suivre pour prélever ces articles 45. Les étapes 52 à 54 se poursuivent jusqu'au chargement dans un emballage 37 du dernier article 45 à prélever. Au cours d'une étape 52, l'unité centrale effectue une détermination de la position du chariot 20 et une sélection de la partie de chemin à afficher pour guider le manutentionnaire qui conduit le chariot 20.

Au cours d'une étape 53, la caméra avant du chariot 20 capture des images et l'unité centrale du chariot 20 combine cette image avec une représentation de la partie du chemin à afficher. Au cours d'une étape 54, l'écran 32 du chariot 20 affiche la combinaison d'image.

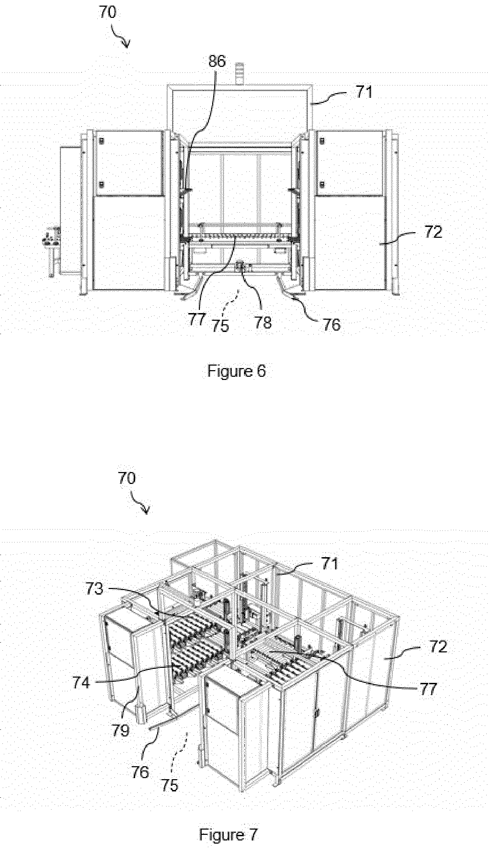

Au cours d'une étape 55, lors de l'arrivée du chariot 20 en regard d'un article 45 à prélever, l'unité centrale commande la signalisation du côté du chariot où se trouve l'emballage 37 où doit être placé cet article 45. Comme exposé ci-dessus, cette signalisation peut consister en l'allumage de l'une des sources lumineuses 27 et 36. Dans d'autres modes de réalisation, cette signalisation est effectuée sur l'écran 32 du chariot 20. Au cours d'une étape 56, l'unité centrale commande la signalisation de chaque emballage 37 où au moins un article 45 qui est prélevé doit être placé. Cette signalisation comporte l'allumage de l'écran 27 de l'interface utilisateur du support 26 supportant l'emballage 37 considéré. Les afficheurs 27 présents en extrémité de chaque support 26 du chariot 20 s'allument et indiquent la quantité d'articles 45 à déposer dans l'emballage 37 porté par ce support 26. Optionnellement, l'allumage de l'une des sources lumineuses 27 et 36 permet, de plus, de repérer de quel côté se trouvent ces supports 26. Au cours d'une étape 57, on vérifie la référence de l'article 45. Cette vérification est, par exemple, effectuée avec un lecteur de code à barres porté par le manutentionnaire. En variante, cette vérification est effectuée avec un lecteur de code à barres porté par le chariot 20. Au cours d'une étape 58, l'opérateur dépose les articles 45 dans chaque emballage de destination et valide ce dépôt en appuyant sur le bouton de validation 38. Le chariot 20 effectue alors une mesure du poids additionnel supporté par l'emballage où a été placé au moins un article 45 de la référence considérée. Au cours d'une étape 59, on compte le nombre d'articles en divisant ce poids additionnel par le poids unitaire de l'article 45 considéré. Au cours d'une étape 60, on vérifie que le nombre d'articles 45 placé dans cet emballage 37 est bien le nombre d'articles 45 à y placer. En cas différence, une alarme est déclenchée. Optionnellement, au cours de l'étape 60, on vérifie que seuls les emballages 37 dans lesquels au moins un article 45 de la référence considérée devait être placé, ont un poids additionnel. S'il y a d'autres emballages, on déclenche une alarme. Au cours d'une étape 61, on détermine si le chargement de tous les emballages 37 portés par le chariot 20 a été achevé. Si oui, on passe à l'étape 62. Si non, on retourne à l'étape 55. Au cours de l'étape 62, le chariot 20 Informe le système de gestion de l'espace de stockage que le chargement du chariot est achevé. Puis, le manutentionnaire procède au déchargement des emballages portés par le chariot, à un poste de fermeture, de stockage ou d'expédition des emballages, par exemple à une station de déchargement décrite en regard des figures 6 à 17.

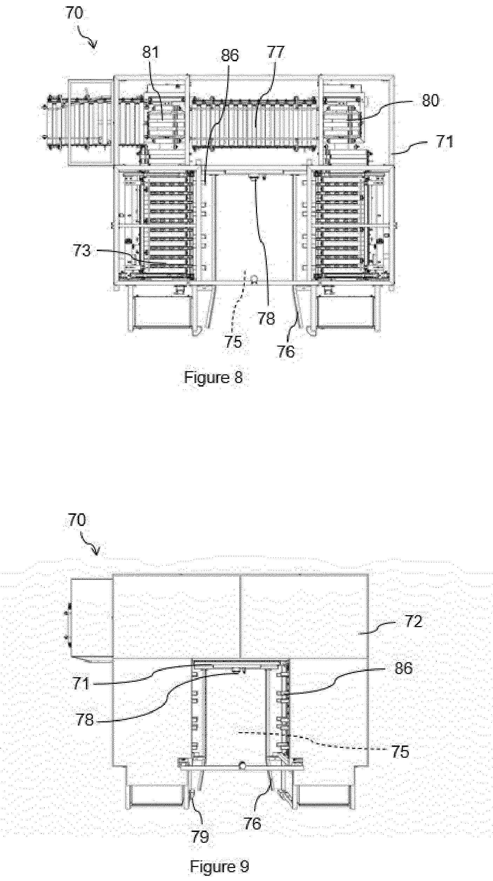

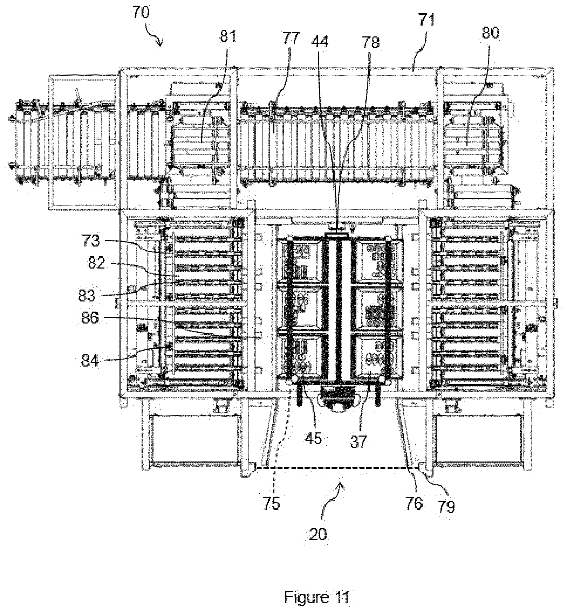

On observe, en figures 6 à 9, une station de déchargement 70 comportant un châssis 71 portant des cloisons externes amovibles 72 et les composants internes de la station 70. Ces composants internes comportent deux convoyeurs horizontaux supérieurs parallèles 73 et deux convoyeurs horizontaux inférieurs parallèles 74, de part et d'autre d'un espace de positionnement 75 d'un chariot 20. Cet espace 75 est bordé par deux rails 76 de guidage des roues latérales 24 du chariot. Grâce à ces rails de guidage 76, les chariots 20 déchargés successivement se trouvent dans la même configuration par rapport à la station, avec une faible variation de leurs positions vis-à-vis de la station 70. Le fond de cet espace 75 est muni d'une ventouse magnétique 78 configurée pour être en contact et retenir la plaque de métal ferromagnétique 44 du chariot au cours du déchargement des emballages 37. Une barrière optique 79, dont la surface de balayage verticale est représentée en trait discontinus en figure 11, est positionnée à l'entrée de l'espace 75 pour détecter le passage d'un chariot 20 et vérifier que rien ni personne ne dépasse de l'espace 75 pendant le déchargement des emballages 37. A hauteur des convoyeurs horizontaux inférieurs 74, se trouve un convoyeur horizontal 77 dont le sens de déplacement des emballages est perpendiculaire à celui des convoyeurs 74. Comme illustré en figure 8, la station 70 est aussi munie de deux ascenseurs rotatifs 80 et 81 pour la reprise des emballages en extrémités des convoyeurs supérieurs 73, leur descente au niveau du convoyeur 77 et leur rotation pour qu'ils soient repris par le convoyeur 77. On observe, en figures 10 et 11, les premières étapes de déchargement d'un chariot 20 par une station 70. En figure 10, le chariot 20 est inséré dans l'espace 75. En figure 11, le chariot 20 est retenu dans l'espace 75 par la ventouse magnétique 78. Comme on le voit dans les figures 10 et 11, chaque convoyeur horizontal 73 ou 74 comporte des rouleaux 82 perpendiculaires à l'arête inférieure des emballages 37 lorsque ces emballages 37 sont sur le chariot 20.

Comme illustré en figures 12 à 16, chaque convoyeur horizontal 73 ou 74 comporte aussi, pour chaque emplacement 25, un module tracteur 85 qui comporte :
- une ventouse pneumatique 84 externe et
- des roulettes 83.

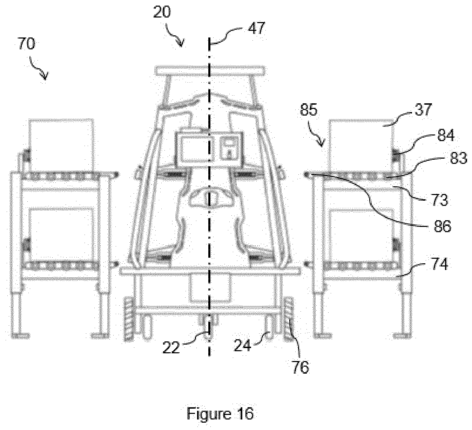

Chaque module tracteur 85 est mis en déplacement perpendiculairement au plan général de symétrie 47 du chariot 20 par un vérin (non représenté). Dans la position de repos, illustrée en figures 12 et 16, chaque module tracteur 85 est retracté si bien que les roulettes 83 sont surplombées par les rouleaux 82.

Une fois le chariot 20 mis en position dans l'espace de stationnement 75, la ventouse magnétique 78 activée et si la barrière optique 79 ne détecte la présence d'aucun opérateur dans l'espace 75, comme illustré en figure 13, les modules tracteurs 85 sont déplacés vers les emplacements 25. Les deux extrémités du module tracteur 85 les plus éloignées de la ventouse 84, qui se trouvent dans l'alignement des roulettes 83, forment une fourche mobile 86 (voir figures 6, 8 à 12 et 14 à 16) configurée pour passer en dessous de l'arête inférieure de chaque emballage 37, en dehors de l'emprise de la butée inférieure 28 du support 26. Préférentiellement ces extrémités sont munies de roulettes libres en rotation dont l'axe de rotation est parallèle à l'arête inférieure de l'emballage 37.

Les fourches 86 passent alors sous l'arête inférieure d'un emballage 37, comme illustré en figure 13 et remontent par une ouverture 42 en soulevant cette arête de l'emballage 37. La fourche 86, elle-même muni d'un rouleau à son extrémité, assure cette fonction pour relever l'emballage 37 faire avancer le module tracteur 85 sous cet emballage 37.

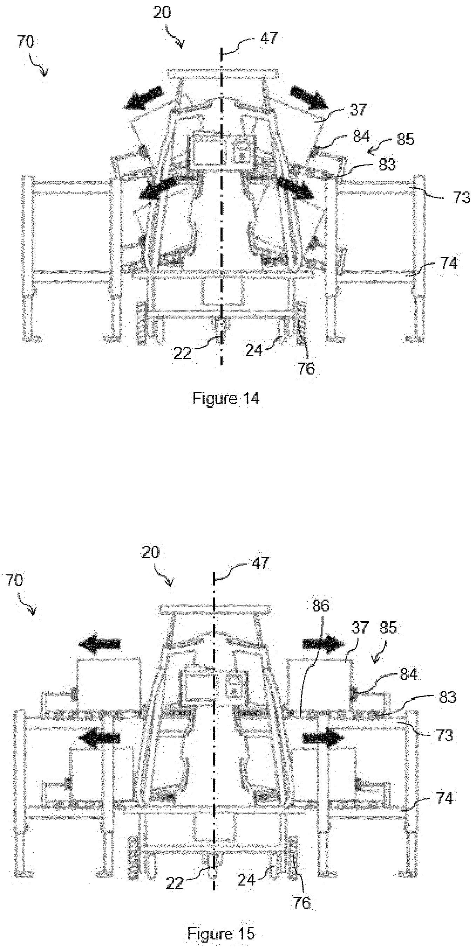

Préférentiellement, la station 70 comporte un détecteur de fixation de l'électroaimant sur une plaque en métal ferromagnétique. La motorisation des fourches n'est activée qu'en cas de détection de la fixation de l'électroaimant sur la plaque 44 d'un chariot 20. Ainsi, les chariots 20 déchargés successivement se trouvent dans la même configuration par rapport à la station 70. On note que l'emballage 37 peut rouler sur le rouleau 34 dès que son arête inférieure atteint le niveau de ce rouleau 34, sous l'effet de la gravité. Les roulettes 83 du module tracteur 85 continuent ensuite à avancer sur le support 26 et sous l'emballage 37 jusqu'à ce que la ventouse pneumatique 84 soit en contact avec la surface externe de l'emballage 37, comme illustré en figure 14. Puis, le module tracteur est rétracté sur le convoyeur 73 ou 74 avec l'emballage soumis, d'une part, à la force de gravité et, d'autre part, à la traction exercée par la ventouse pneumatique 84, comme illustré en figure 15.

Une fois que le module tracteur est retourné dans sa position de départ, les roulettes 83 se retrouvent surplombées par les rouleaux du convoyeur 73 ou 74, si bien que ces rouleaux peuvent entraîner l'emballage vers le convoyeur 77.

Ainsi, la station 70 comporte, pour chaque support 26 d'un chariot 20 :
- une fourche mobile configurée pour passer en dessous de l'arête inférieure de chaque emballage 37, en dehors de l'emprise de la butée inférieure 28, chaque fourche étant munie de roulettes parallèles à l'arête inférieure de l'emballage 37 et
- une motorisation de chaque fourche mobile configurée pour, d'abord, placer la fourche mobile en dessous de l'arête inférieure de l'emballage 37 puis faire remonter la fourche pour désengager l'arête inférieure de la butée inférieure 28.

Ainsi, le déplacement de la fourche permet la libération de l'emballage de la butée inférieure puis son poids entraîne l'emballage sur le support incliné et sur les roulettes de la fourche correspondant à ce support. Dans le mode de réalisation représenté dans les figures, chaque fourche de module tracteur 85 est mécaniquement associée à au moins une ventouse pneumatique 84 configurée pour tracter l'emballage 37 vers l'intérieur de la station 70. Dans des variantes, chaque fourche est munie d'au moins un rouleau motorisé configuré pour déplacer l'emballage 37 vers l'intérieur de la station 70. Ainsi, l'emballage 37 peut être mis en mouvement par le rouleau motorisé vers l'intérieur de la station 70.

Dans le mode de réalisation représenté dans les figures, les chariots 20 comportent une pluralité de niveaux d'emballages et la station comporte au moins un ascenseur 80, 81 à rouleaux motorisés configuré pour amener tous les emballages 37 au même niveau, sur un convoyeur 77. L'étiquetage et le conditionnement, par exemple sur des palettes, des emballages 37, est effectué au même niveau, ce qui simplifie les dispositifs mis en oeuvre pour réaliser ces opérations.

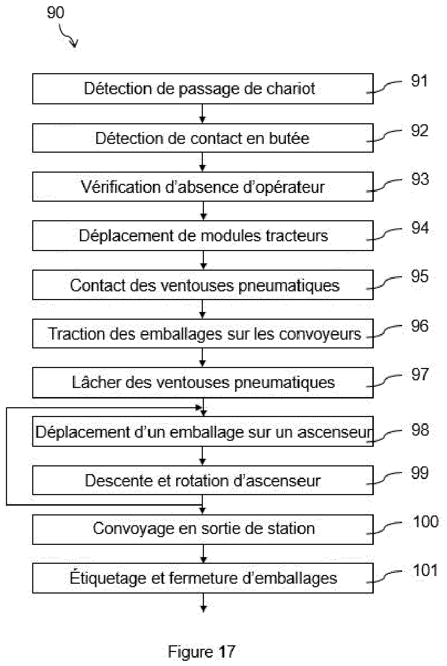

On observe, en figure 17, une succession 90 d'étapes réalisées avec la station 70.

Au cours d'une étape 91, la barrière optique 79 effectue la détection du passage d'un chariot 20. Au cours d'une étape 92, la ventouse magnétique 78 est activée et détecte sa solidarisation avec une plaque de métal ferromagnétique. Au cours d'une étape 93, la barrière optique 79 effectue la vérification d'absence d'opérateur dans son champ optique.

Au cours d'une étape 94, une unité centrale (non représentée) de la station 70 déclenche le déplacement des modules tracteurs 85 vers les supports 26 du chariot 20. Au cours d'une étape 95, les ventouses pneumatiques 84 entrent en contact avec les surfaces externes des emballages 37. Au cours d'une étape 96, une fois toutes les ventouses pneumatiques 84 en contact avec les surfaces externes des emballages 37, l'unité centrale de la station 70 déclenche le déplacement des modules tracteurs 85 vers les convoyeurs 73 et 74.

Au cours d'une étape 97, une fois que les modules tracteurs sont revenus dans leur position initiale, les ventouses pneumatiques 84 sont désactivées, c'est-à-dire qu'elles ne présentent plus de dépression pour se fixer sur les surfaces externes des emballages 37. Au cours d'une étape 98, les emballages 37 positionnés sur les convoyeur supérieurs 73 sont tour à tour positionnés sur les rouleaux des ascenseurs 80 et 81. Au cours d'une étape 99, les ascenseurs 80 et 81 descendent les emballages 37 et leur font réaliser une rotation d'un quart de tour avant de les déplacer sur le convoyeur 77. Au cours d'une étape 100, le convoyeur 77 est actionné pour convoyer les emballages en sortie de la station. Les emballages 37 initialement présents sur les convoyeurs inférieurs 74 ne font l'objet que d'une rotation d'un quart de tour par les ascenseurs 80 et 81, avant d'être convoyés vers la sortie par le convoyeur 77. Au cours d'une étape 101, les emballages sont fermés et étiquetés pour leur stockage ou leur expédition, de manière connue par ailleurs.

## Revendications

1. Chariot (20) de manutention d'au moins un emballage (37) prédéterminé en forme de parallélépipède rectangle, **caractérisé en ce qu'**il comporte, pour chaque emballage à transporter :
- un support (26) plan incliné par rapport à l'horizontale, muni d'une butée inférieure horizontale (28) pour empêcher le glissement de l'emballage et supporter l'emballage dans une position où il présente deux faces verticales et
- une butée supérieure (29, 49) au-dessus du support, dont la distance de la butée inférieure est inférieure à la longueur de la diagonale d'une face verticale de l'emballage.

2. Chariot (20) selon la revendication 1, dans lequel la butée supérieure (29, 49) présente une forme d'arceau parcourant la face supérieure de l'emballage.

3. Chariot (20) selon l'une des revendications 1 ou 2, qui comporte un rouleau horizontal (34) libre en rotation surmontant la butée inférieure (28).

4. Chariot (20) selon l'une des revendications 1 à 3, qui comporte une pluralité de supports (26) à la même hauteur, une pluralité de hauteurs de supports et des supports débouchant sur au moins deux faces du chariot.

5. Chariot (20) selon la revendication 4, dans lequel chaque support (26) d'emballage (37) inférieur est plus écarté du centre de gravité du chariot que chaque support d'emballage qui est au-dessus de ce support d'emballage inférieur.

6. Chariot (20) selon l'une des revendications 1 à 5, qui comporte, pour au moins un support (26), un capteur de mesure de poids des articles (45) présents sur ledit support.

7. Chariot (20) selon l'une des revendications 1 à 6, qui comporte un châssis (21) supportant les supports (26) et une roue motrice (23) positionnée au centre de la base du châssis.

8. Chariot (20) selon l'une des revendications 1 à 7, dans lequel un timon (31) de conduite est positionné sur une face, dite « arrière » du chariot, une caméra est positionnée sur la face du chariot opposée à la face arrière, caméra dont le champ optique est à l'extérieur du chariot, la face arrière du chariot comportant un écran (32) de visualisation configuré pour afficher l'image captée par la caméra.

9. Chariot (20) selon l'une des revendications 1 à 8, qui comporte un moyen de guidage (27, 36) du conducteur du chariot vers un emballage (37) supporté par le chariot dans lequel le prochain article (45) est à placer.

10. Chariot (20) selon l'une des revendications 1 à 9, qui comporte, de plus, un moyen d'accès à une mémoire de positions d'articles dans un espace de stockage, un moyen de détermination de la position du chariot dans cet espace de stockage et un moyen (32) de guidage du conducteur du chariot vers un article (45) à placer dans un emballage.

11. Chariot (20) selon la revendication 10, dans lequel le moyen de détermination de la position du chariot comporte au moins une caméra et un moyen de traitement d'images fournies par au moins une dite caméra, le chariot comportant, de plus, un écran (32) de visualisation au-dessus d'un timon (31), l'écran étant configuré pour afficher l'image fournie par une caméra, le moyen de guidage du conducteur du chariot étant configuré pour, lorsque le chariot est statique, provoquer l'affichage sur l'écran (32), d'une représentation d'un chemin à faire suivre au chariot et/ou de l'emplacement suivant où au moins un article (45) doit être prélevé et, lorsque le chariot est mobile, provoquer l'affichage sur l'écran au moins de l'image fournie par la caméra.

12. Chariot (20) selon l'une des revendications 10 ou 11, dans lequel le moyen de guidage du conducteur du chariot comporte au moins les deux sources lumineuses (27, 36) positionnée de part et d'autre du chariot, une de ces sources lumineuses émettant un signal lumineux prédéterminé pour représenter le côté du chariot où se trouve l'emballage (37) où le prochain article (45) est à placer.

13. Station (70) de déchargement d'un chariot (20) de manutention selon l'une des revendications 1 à 12, chariot dans lequel, pour chaque emballage (37), la butée inférieure horizontale (28) maintient l'emballage dans une position où il présente une arrête inférieure en appui sur la butée inférieure, la station comportant, pour chaque support d'un chariot :
- une fourche mobile (86) configurée pour passer en dessous de l'arête inférieure de chaque emballage, en dehors de l'emprise de la butée inférieure, chaque fourche étant munie de roulettes (83) dont l'axe de rotation est parallèle à l'arête inférieure de l'emballage et
- une motorisation de chaque fourche mobile configurée pour, d'abord, placer la fourche mobile en dessous de l'arête inférieure de l'emballage puis faire remonter la fourche pour désengager l'arête inférieure de la butée inférieure.

14. Station (70) selon la revendication 13, qui comporte au moins un convoyeur (73, 74) à rouleaux (82) perpendiculaires à l'arête inférieure des emballages (37) lorsque ces emballages sont sur le chariot (20) et des roulettes (83) libres d'axes de rotation parallèles à l'arête inférieure des emballages lorsque ces emballages sont sur le chariot, les roulettes étant mises en déplacement vertical pour surplomber les rouleaux pendant le déplacement des emballages depuis le chariot jusque dans la station puis pour se rétracter afin d'être surplombées par les rouleaux.

15. Station (70) selon l'une des revendications 13 ou 14, dans lequel les chariots (20) comportent une pluralité de niveaux d'emballages et la station comporte au moins un ascenseur (80, 81) à rouleaux motorisés configuré pour amener tous les emballages (37) au même niveau, sur un convoyeur (77).
